# EUROPÄISCHE PATENTANMELDUNG

(11) **EP 1 475 294 A2**
(43) Veröffentlichungstag der Anmeldung: **10.11.2004**
(21) Anmeldenummer: 04010863.1
(22) Anmeldetag: 07.05.2004
(51) Int. Cl.: B62D 25/16

(54) **Spritzwasser-Abschirmung für die Räder von Lastkraftwagen**

(30) Priorität: 08.05.2003 IT PS20030019
(71) Anmelder: Savelli, Aulo, 61100 Pesaro (IT); Grianti, Francesco, 61100 Pesaro (IT)
(72) Erfinder: Savelli, Aulo, 61100 Pesaro (IT); Grianti, Francesco, 61100 Pesaro (IT)
(74) Vertreter: Gustorf, Gerhard, Dipl.-Ing.

(57) **Zusammenfassung**

Gegenstand der Erfindung ist eine Spritzwasser-Abschirmung für die Räder von Lastkraftwagen oder dergleichen, welche die Räume der Räder von Lastkraftwagen, Anhängern oder dergleichen einschließt, um zu verhindern, daß von den Rädern bei Regen aufgewirbeltes Wasser wegspritzt und dadurch die Sicht nachfolgender oder überholender Fahrzeuge beeinträchtigt.

## Beschreibung

Die Erfindung betrifft eine Spritzwasser-Abschirmung für die Räder von Lastkraftwagen.

Allen Autofahrern ist die mißliche Lage bekannt, die durch Spritzwasser verursacht wird, wenn bei Regen die Räder großer Lastkraftwagen das Wasser gegen überholende Kraftfahrzeuge schleudern. Diese im allgemeinen sehr großen Spritzwassermengen zwingen den überholenden Fahrer dazu, für einige Sekunden sein Fahrzeug ohne jede Sicht nach vorn und zu den Seiten hin zu lenken. Unter diesen Bedingungen ergibt sich eine erhebliche Gefahr, weil der Fahrzeuglenker für einen Moment in Panik gerät und dabei zu Fehlverhalten neigt, das insbesondere bei sehr dichtem Verkehr auch zu tödlichen Unfällen und zu Auffahrunfällen führen kann.

Um diesem Übelstand zu begegnen, wurden sogenannte Dränier-Fahrbahnbelege entwickelt, die einen Wasserstau und damit ein Aquaplaning der Räder verhindern sollen. Mit diesem System wurden bereits einige Autobahnabschnitte gebaut, wodurch der oben erwähnte, gefährliche Zustand merklich verringert werden konnte, ohne daß er vollständig auszuschalten wäre, insbesondere bei sehr starken Regengüssen oder Wolkenbrüchen, bei denen die Förderleistung der Drainageräume im Fahrbahnbelag nicht ausreicht, um das gesamte Wasser, das von oben zuströmt, vollständig abzuführen. Überdies sind die Kosten für die Ausdehnung dieses Systems auf das gesamte Straßennetz so hoch, daß eine totale Anwendung mittelfristig ausgeschlossen ist, auch deshalb, weil hinsichtlich der Dauer der Wirksamkeit dieses Straßenbelagsystems Zweifel angebracht sind.

Um unmittelbar am Fahrzeug entsprechende Vorkehrungen zu treffen, sind kleine Abweisplatten bekannt, die die Aufgabe haben, das von den Rädern aufgewirbelte Wasser aufzufangen. Diese Spritzschutzbleche werden jedoch nur an dem nach innen weisenden Bereich der Rückseite herkömmlicher Kotflügel angebracht, was zur Folge hat, daß nur ein geringer Teil des aufgewirbelten Wassers abgefangen wird, weshalb der eingangs erwähnte, untragbare Zustand nur unzureichend beseitigt wird.

Das beklagenswerte Phänomen ergibt sich aus dem Zusammenwirken von zwei Umständen, nämlich einerseits der starken Druck- oder Quetschkraft, die die Räder auf das Wasser ausüben, welches sich auf der Straße befindet und dabei aufgewirbelt und auch zur Seite hin weggespritzt wird, und andererseits aus der Luftturbulenz, die durch die Fahrzeuggeschwindigkeit erzeugt wird und die das von den Rädern abgegebene Wasser mitreißt, nochmals anhebt und teilweise in Nebelform gegen die Windschutzscheibe eines überholenden Kraftwagens schleudert, wodurch der Fahrer vorübergehend ohne Sicht ist.

Der Erfindung liegt die Aufgabe zugrunde, eine Spritzwasser-Abschirmung für die Räder von großen Kraftfahrzeugen zur Verfügung zu stellen, die an die Stelle bisheriger Kotflügel oder mit diesen integriert eingebaut werden können, um dem oben genannten Übelstand abzuhelfen.

Gemäß der Erfindung wird die Aufgabe durch die im Patentanspruch 1 genannten Merkmale gelöst, wodurch der Vorteil erzielt wird, daß die Räder zumindest teilweise, gegebenenfalls auch vollständig eingeschlossen sind, so daß das von diesen aufgewirbelte Wasser in dem eingeschlossenen Raum vollständig zurückgehalten wird.

Weitere Merkmale und Vorteile der Erfindung ergeben sich aus den Patentansprüchen und aus der folgenden Beschreibung von zwei Ausführungsbeispielen, die in der Zeichnung dargestellt sind. Es zeigen:
Figur 1 eine aufgeschnittene Seitenansicht entsprechend der Ebene a-a der Figur 2 zur Darstellung einer Abschirmung gemäß der Erfindung,
Figur 2 eine Schnittdarstellung in der Ebene b-b der Figur 1,
Figur 3 die Außenansicht der Abschirmung der Figuren 1 und 2 und
Figur 4 die perspektivische Darstellung einer Variante der Erfindung.

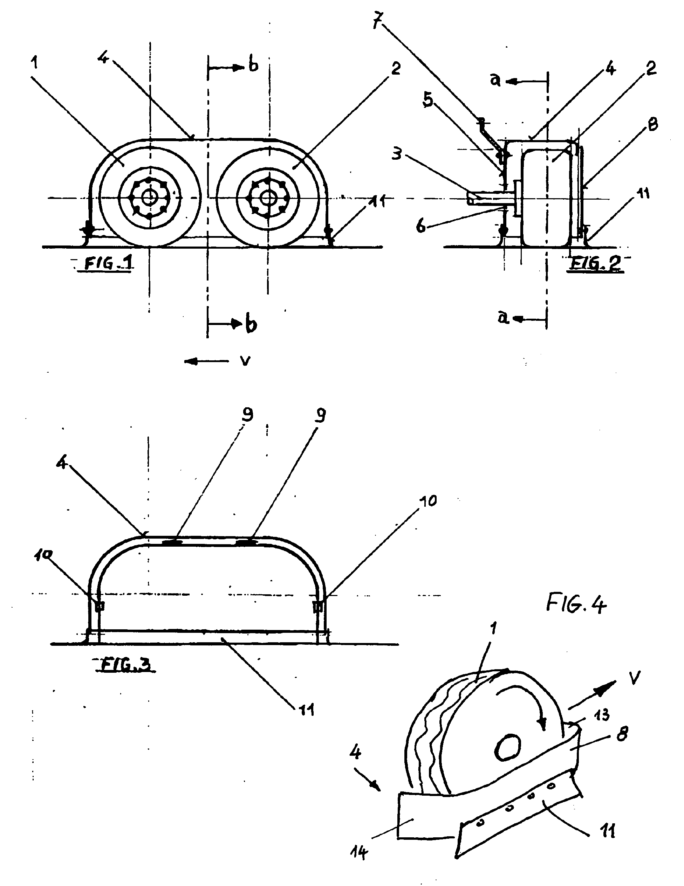

In den Figuren 1 und 2 sind zwei Hinterräder 1, 2 eines Lastkraftwagens mit drei Achsen dargestellt. Unter der Annahme, daß die Fahrtrichtung v des Fahrzeugs in Figur 1 von rechts nach links verläuft, ist das mit 1 bezeichnete Rad das Rad der zweiten Achse, während das Rad 2 dasjenige der dritten Achse ist. In Figur 2 ist ein Abschnitt der Achse 3 angedeutet, wobei weitere Radaufhängungselemente wie Stoßdämpfer, Lenker zur Befestigung der Achsen am Fahrzeugrahmen und dergleichen nicht dargestellt sind, da sie an sich bekannt und für das Verständnis der Erfindung nicht notwendig sind.

Mit 4 ist eine Verkleidung bezeichnet, die entsprechend der Erfindung ausgeführt ist und im dargestellten Fall aus einem Stück besteht, das die Räder 1 und 2 nach vorn, nach hinten, nach oben und zur Seite hin umschließt. In die seitliche Innenwand 5 sind Öffnungen 6 eingearbeitet, durch welche die Achsen 3 der Räder 1 und 2 hindurchtreten. Ferner sind Befestigungsbügel 7 in geeigneter Anzahl vorgesehen, um die gesamte Verkleidung 4 am Fahrzeugrahmen zu befestigen. Selbstverständlich variieren Form und Abmessung der Befestigungsbügel 7 in Abhängigkeit von Form und Dimension des Fahrzeugs, an dem die Verkleidung 4 angebracht werden soll.

Für den seitlichen Abschluß der Radabschirmung dient eine Abschirmwand 8, die an der Verkleidung 4 vorzugsweise mittels Scharnieren 9 und Schlössern 10 befestigt ist. Diese Art der Befestigung hat den Vorteil, daß die Abschirmwand 8 leicht ausgeschwenkt und angehoben werden kann, wenn Arbeiten an den Rädern durchzuführen sind, beispielsweise ein Radwechsel, während die Schlösser 10 sicherstellen, daß sich die Abschirmwand 8 nicht öffnen kann, während das Fahrzeug in Bewegung ist oder wenn ein Öffnen nicht gewünscht wird.

Am unteren Rand der vertikalen Abschlußseiten der Räder ist ein elastischer Streifen 11 aus Gummi oder Kunststoff oder einem anderen, flexiblen Material befestigt, um auch den Bereich abzuschließen, den die starren Wände gegenüber der Fahrbahn offenlassen müssen, damit die Reifen und die Radaufhängungen die notwendigen Vertikalbewegungen durchführen können.

Aus der obigen Beschreibung ergibt sich, daß das Wasser, welches von den Rädern aufgewirbelt wird, nicht aus dem Raum heraustreten kann, in dem die Räder eingeschlossen sind, so daß dadurch die Sicht in den unmittelbar benachbarten Zonen unbeeinträchtigt bleibt.

Die Beschreibung des Ausführungsbeispiels der Figuren 1 bis 3 ist selbstverständlich nicht einschränkend, wobei an sich bekannte Einzelheiten für die normale Anwendung bei Lastkraftwagen und Lieferfahrzeugen, die für das Verständnis der Erfindung nicht notwendig sind, weggelassen sind. Daher umfaßt die Erfindung auch alle konstruktiven Varianten, die an dem System gemäß der Erfindung zum Abschirmen der Räder von Transportfahrzeugen oder Personenkraftwagen, Anhängern und dergleichen vorgenommen werden können und verhindern sollen, daß das von den Rädern aufgewirbelte Wasser in Bereiche außerhalb des Fahrzeugs gelangen kann, damit den nachfolgenden oder überholenden Verkehrsteilnehmern die Sicht nicht genommen wird.

So ist es insbesondere möglich, die Verkleidung 4 auch so auszuführen, daß sie nicht den gesamten Radraum einschließt, wie das im Beispiel der Figuren 1 bis 3 der Fall ist, so daß weniger kritische Bereiche freibleiben können. Wesentlich ist dabei, daß diese Verkleidungen so positioniert und angebracht werden, daß sie Spritzwasser auffangen und verhindern, daß dieses von den Rädern aufgewirbelt wird, was zu Sichtbeeinträchtigungen bei nachfolgenden oder überholenden Fahrzeugen führen könnte.

Figur 4 zeigt schematisch eine Variante der Erfindung, bei der die Verkleidung 4 auf einen unteren Schutz beschränkt ist, bestehend aus einer seitlichen Abschirmwand 8, von deren beiden Enden sich in Fahrtrichtung v ein vorderer Flügel 13 und ein hinterer Flügel 14 erstrecken. Wie dargestellt, kann auch die seitliche Innenwand 5 fehlen; fehlen kann ferner auch der vordere Flügel 13. Es ist jedoch wichtig, daß der freie Raum zwischen der Unterkante der seitlichen Abschirmwand 8 und der Fahrbahn durch einen elastischen Streifen 11 abgeschirmt ist.

## Patentansprüche

1. Spritzwasser-Abschirmung für die Räder von Lastkraftwagen, Anhängern oder dergleichen, **dadurch gekennzeichnet, daß** diese die Räder (1, 2) teilweise oder vollständig einschließt, so daß das von den Rädern bei Regen oder nasser Fahrbahn aufgewirbelte Wasser zur Seite und nach hinten hin nicht weggeschleudert und die Sicht nachfolgender oder überholender Fahrzeuge beeinträchtigt wird.

2. Abschirmung nach Anspruch 1, **dadurch gekennzeichnet, daß** die Abschirmwände so geformt und angebracht sind, daß sie jede Spritzwirkung des von den Rädern aufgewirbelten Wassers verhindern und dieses innerhalb des abgeschlossenen Raumes halten.

3. Abschirmung nach Anspruch 1 oder 2, **dadurch gekennzeichnet, daß** am unteren Rand der Abschirmwände (8) vertikale, elastische Streifen (11) angebracht sind, welche den abgeschlossenen Raum nach unten vervollständigen und dabei verhindern, daß die starren Teile der Abschirmwände bei den Vertikalbewegungen der Radaufhängungen und Reifen auf der Fahrbahnoberfläche streifen.

4. Abschirmung nach einem der vorhergehenden Ansprüche, **dadurch gekennzeichnet, daß** die Abschirmwände (5, 8) unmittelbar am Fahrzeugrahmen, an Radnaben oder anderen Fahrzeugteilen befestigt sind, so daß sie auch bei gelenkten Rädern angebracht werden können, ohne die Querabmessungen des Fahrzeugs zu vergrößern.

5. Abschirmung nach einem der vorhergehenden Ansprüche, **dadurch gekennzeichnet, daß** die Abschirmwand (8), die an der Außenseite des Fahrzeugs vorgesehen ist, so befestigt ist, daß sie über Scharniere (9) und Schlösser (10) oder andere Kupplungssysteme leicht geöffnet werden kann und der den Reifen aufnehmende Raum leicht zugänglich ist, ohne dabei die Sicherheit der Abschirmwand (8) zu beeinträchtigen, so daß diese in ihrer Schließstellung bleibt, wenn ein Öffnen nicht erwünscht ist.

6. Abschirmung nach einem der vorhergehenden Ansprüche, **dadurch gekennzeichnet**, das die Abschirmwande (5, 8) aus gerauschdammendem Werkstoff hergestellt oder mit geräuschdämmendem Anstrich beschichtet sind, um die akustische Beeinträchtigung im benachbarten Straßenbereich und in der Fahrerkabine des Fahrzeugs zu vermeiden.

7. Abschirmung nach einem der vorhergehenden Ansprüche, **dadurch gekennzeichnet, daß** die Abschirmwände (5, 8) unter Zwischenschaltung von elastischen Dämpfungsteilen am Fahrzeug befestigt sind, wodurch Schwingungen und/oder Geräusche, die durch die Räder und/oder Spritzwasser verursacht werden, nicht auf das Fahrzeug und auf die Fahrerkabine übertragen werden.

8. Abschirmung nach Anspruch 4, **dadurch gekennzeichnet, daß** diese bei der Anbringung an gelenkten Rädern den Radausschlägen folgen kann.

9. Abschirmung nach einem der vorhergehenden Ansprüche, **dadurch gekennzeichnet, daß** die Abschirmwand (8, 13, 14) nur den unteren Außenbereich des Rades (1) mittels einer unteren Abdeckung abschließt, bestehend aus einer seitlichen Abschirmwand (8), von der sich wenigstens ein hinterer Flügel (14) erstreckt und an der ein elastischer Streifen (11) befestigt ist, der den Raum bis zur Fahrbahn abdeckt.
